# EUROPEAN PATENT SPECIFICATION

(11) **EP 3 313 125 B1**
(45) Date of publication and mention of the grant of the patent: **04.12.2019**
(21) Application number: 17198093.1
(22) Date of filing: 24.10.2017
(51) Int. Cl.: H04W 52/02

(54) **METHOD AND DEVICE FOR CONTROLLING SCREEN STATE, COMPUTER PROGRAM AND RECORDING MEDIUM**
VERFAHREN UND VORRICHTUNG ZUR STEUERUNG EINES BILDSCHIRMZUSTANDS, COMPUTERPROGRAMM UND AUFZEICHNUNGSMEDIUM
PROCÉDÉ ET DISPOSITIF DE COMMANDE D'ÉTAT D'ÉCRAN, PROGRAMME INFORMATIQUE ET SUPPORT D'ENREGISTREMENT

(30) Priority: 24.10.2016 CN 201610936722
(43) Date of publication of application: 25.04.2018
(73) Proprietor: Beijing Xiaomi Mobile Software Co., Ltd., Beijing 100085 (CN)
(72) Inventor: CHIAFU, Yen, Beijing 100085 (CN); WANG, Nannan, Beijing 100085 (CN); XIONG, Dawei, Beijing 100085 (CN)
(74) Representative: Grunert, Marcus

(56) References cited:
- US-A1- 2013 257 583

## Description

### TECHNICAL FIELD

The present invention generally relates to the technical field of electronic devices, and more particularly, to a method and a device for controlling a screen state, a computer program and a recording medium.

### BACKGROUND

Terminals generally have screen turning-off function. While a user is making a call through a terminal, if the terminal is put approximate to an ear of the user, the terminal may automatically turn off the screen.

In the related art, by enabling an ultrasonic function of the terminal, when an obstruction object is detected, the terminal may be controlled to turn off the screen, in order to save power consumption and prevent unintended user operation.
US 2013/257583 A1 discloses a method for controlling a screen state with ultrasonic detection. In its simplest form, the method includes: periodically transmitting ultrasonic signals from a wireless communication device; sensing a reflection of the ultrasonic signals; and if a threshold is met, adjusting a screen operating mode of the wireless communication device.

### SUMMARY

In order to overcome the problem existing in the related art, the present invention provides a method and a device for controlling a screen state, a computer program and a recording medium according to the features disclosed in the appended claims.

According to a first aspect of the present invention, there is provided a method for controlling a screen state according to claim 1.

By determining whether an obstruction exists for the terminal by obtaining returned ultrasonic-wave values for successive multiple times within a certain time period, one may improve the accuracy of the determination, and overcome the defects in the related art that incorrect determination causes misjudgment operation such as a flash screen, thus improving user experience.

In one embodiment, the method further includes: determining that no obstruction exists for the terminal when none of the N determination results indicates that an obstruction exists for the terminal.

By determining whether an obstruction exists for the terminal by obtaining returned ultrasonic-wave values for successive N times within a certain time period, and only when none of the N determination results indicates that an obstruction exists for the terminal, it may be determined that no obstruction exists for the terminal, which may improve the accuracy of the determination, and overcome the defects in the related art that incorrect determination causes misjudgment operation such as a flash screen, thus improving user experience.

N test values of a distance between the terminal and an object may be determined based on the N times of ultrasonic transmission-signals and corresponding ultrasonic received-signals. A determination result corresponding to a test value less than a preset threshold may be determined as an obstruction existing for the terminal. Thus, the determination result may be more accurate.

In one embodiment, determining N test values of a distance between the terminal and an object based on the N times of ultrasonic transmission-signals and corresponding ultrasonic received-signals includes:

determining the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

An implementation may be provided in which a test value of the distance between the terminal and the object is determined according to a sending time of the ultrasonic transmission-signal, a received time of the corresponding ultrasonic received-signal and an ultrasonic propagation speed. This may reduce the complexity of the operation and improve the efficiency of the implementation.

In one embodiment, determining N test values of a distance between the terminal and an object based on the N times of ultrasonic transmission-signals and corresponding ultrasonic received-signals includes:

determining the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

An implementation may be provided in which a test value of the distance between the terminal and the object is determined according to a difference between an amplitude of the ultrasonic transmission-signal and an amplitude of the corresponding ultrasonic received-signal. This may reduce the complexity of the operation and improve the efficiency of the implementation.

In one embodiment, transmitting ultrasonic transmission-signals for N times within a preset time period and receiving returned ultrasonic received-signals includes:

transmitting ultrasonic transmission-signals for N times within a preset time period by means of an audio transmitter of the terminal, and receiving returned ultrasonic received-signals by means of an audio receiver of the terminal.

Ultrasonic transmission-signals may be transmitted by means of an audio transmitter of the terminal and returned ultrasonic received-signals may be received by means of an audio receiver of the terminal. This may improve the efficiency of the implementation by simplifying the solution.

In one embodiment, after the screen state of the terminal is switched to the turned-off state, the method further includes:

switching the screen state of the terminal from the turned-off state to the turned-on state when determining that no obstruction exists for the terminal.

After the screen state of the terminal is switched to a turned-off state, a determination may be continued to be made as whether an obstruction exists. When it is determined that no obstruction exists for the terminal, the screen state of the terminal may be switched from the turned-off state to the turned-on state. Thus, it may facilitate user operation, and improve the user experience.

According to a second aspect of the present invention, there is provided a device for controlling a screen state according to and including the features of claim 7.

In one embodiment, the device further includes:
a second determining module configured to determine that no obstruction exists for the terminal when none of the N determination results indicates that an obstruction exists for the terminal.

According to a third aspect of the present invention, there is provided a device for controlling a screen state with all features of claim 11.

According to a fourth aspect, the invention is also directed to a computer program according to claim 12, including instructions to cause the device according to claim 11 to execute the steps of the method for controlling a screen state according to the present invention as claimed in claims 1 to 6.

The invention is, in one embodiment, also directed to a computer-readable recording medium according to claim 13 containing instructions of a computer program as claimed in claim 12.

The information medium can generally be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can generally also be an integrated circuit in which the program is incorporated, the circuit being adapted to execute the computer program in question or to be used in its execution.

### BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.
Fig. 1 is a flowchart illustrating a method for controlling a screen state according to an exemplary embodiment.
Fig. 2 is a flowchart illustrating a step 104 of the method for controlling a screen state according to an exemplary embodiment.
Fig. 3 is a flowchart illustrating a step 103 of the method for controlling a screen state according to an exemplary embodiment.
Fig. 4 is a flowchart illustrating steps 101-102 of the method for controlling a screen state according to an exemplary embodiment.
Fig. 5 is a flowchart illustrating a method for controlling a screen state according to an exemplary embodiment.
Fig. 6 is a flowchart illustrating a method for controlling a screen state according to an exemplary embodiment.
Fig. 7 is a block diagram illustrating a device for controlling a screen state according to an exemplary embodiment.
Fig. 8 is a block diagram illustrating a device for controlling a screen state according to an exemplary embodiment.
Fig. 9 is a block diagram illustrating a device for controlling a screen state according to an exemplary embodiment.
Fig. 10 is a block diagram illustrating a device for controlling a screen state according to an exemplary embodiment.
Fig. 11 is a block diagram illustrating a device for controlling a screen state according to an exemplary embodiment.
Fig. 12 is a block diagram illustrating a device for controlling a screen state according to an exemplary embodiment.
Fig. 13 is a block diagram illustrating a device for controlling a screen state according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

In the related art, a user may enable an ultrasonic function of a terminal. Then, when the user is making a call through the terminal, the user puts the terminal close to his ear, the terminal may detect an obstruction and control the terminal to turn off the screen, so as to save power consumption and prevent unintended user operation. However, there is a defect in the related art that, in the related art, it is determined whether an obstruction exists through a single test by transmitting and then receiving an ultrasonic wave. However, if the obstruction moves at a relatively low frequency and during the single test the obstruction does not move, the terminal may determine that no obstruction exists, and do not perform the ultrasonic function. This may bring about an incorrect determination result and cause misjudgment operation such as flash screen, influencing user experience.

In order to solve the above defect, an embodiment of the present invention provides a method for controlling a screen state, including: when it is detected that an ultrasonic function of the terminal is enabled, within a preset time period, ultrasonic transmission-signals are transmitted for N times, N being an integer greater than 1; returned ultrasonic received-signals are received; it is determined whether an obstruction exists for the terminal for each of the N times based on the N times of ultrasonic transmission-signals and corresponding ultrasonic received-signals, to obtain N determination results; and when at least one of the N determination results indicates that an obstruction exists for the terminal, it is determined that an obstruction exists for the terminal and a screen state of the terminal is switched from a turned-on state to a turned-off state. Thus, it may improve the accuracy of determination, and overcome the defects in the related art that incorrect determination causes misjudgment operation such as a flash screen, thus improving user experience.

The technical solution of the embodiment of the present invention may be applied to an occasion when it is determined whether a terminal is obstructed based on ultrasonic detection function. The terminal may be a smart phone, a smart watch, a bracelet, a smart appliance and other devices equipped with ultrasonic detection function.

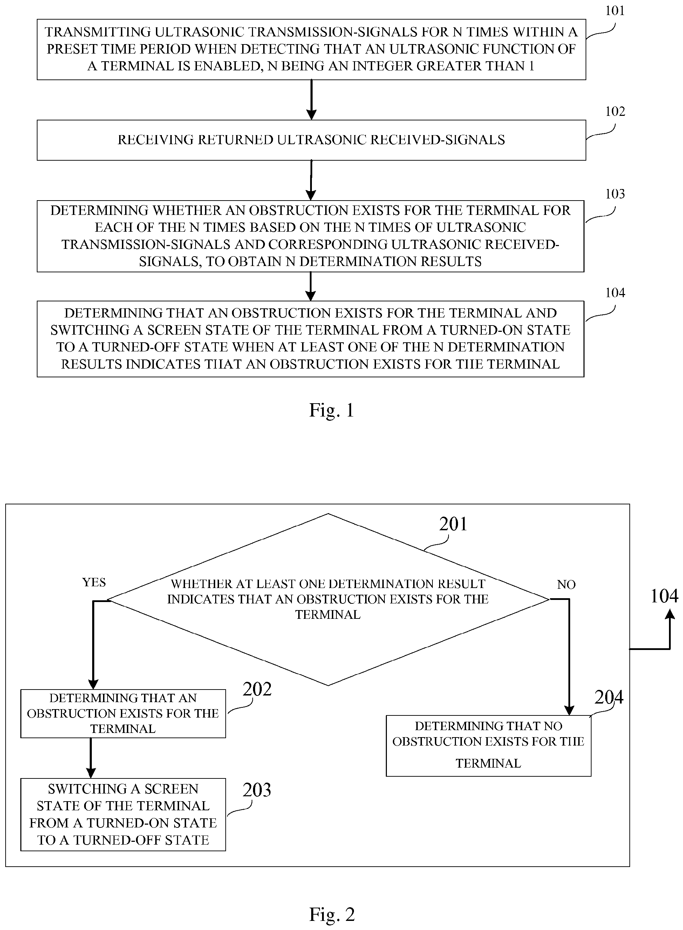

Fig. 1 is a flowchart illustrating a method for controlling a screen state according to an exemplary embodiment. The method may be performed by a terminal. As shown in Fig. 1, the method may include the following steps 101-104.

At step 101, when it is detected that an ultrasonic function of the terminal is enabled, within a preset time period, ultrasonic transmission-signals are transmitted for N times, N being an integer greater than 1.

As an example, after the terminal starts a phone call, when it is detected that an ultrasonic function of the terminal is enabled, within a preset time period, ultrasonic transmission-signals are transmitted for N times successively, to perform N times of obstruction tests based on ultrasonic wave.

At step 102, returned ultrasonic received-signals are received.

Here, in the N times of ultrasonic transmission-signal transmitted by the terminal, ultrasonic received-signals returned by an object may be received by the terminal.

At step 103, it is determined whether an obstruction exists for the terminal for each of the N times based on the N times of ultrasonic transmission-signals and corresponding ultrasonic received-signals, to obtain N determination results.

Here, for each time of the obstruction tests based on ultrasonic wave, the terminal made an obstruction determination based on the ultrasonic transmission-signal and corresponding ultrasonic received-signal of that time of obstruction test. After N times of obstruction tests based on ultrasonic wave are completed, N determination results are obtained.

At step 104, when at least one of the N determination results indicates that an obstruction exists for the terminal, it is determined that an obstruction exists for the terminal and a screen state of the terminal is switched from a turned-on state to a turned-off state.

As an example, the screen state of the terminal may include at least a turned-on state and a turned-off state. The turned-on state refers to a state when the screen of the terminal is turned on and operable by the user. The turned-off state refers to a state when the screen of the terminal is turned off.

In the technical solution provided by the embodiment of the present invention, by determining whether an obstruction exists for the terminal by obtaining returned ultrasonic-wave values for successive multiple times within a certain time period, it may improve the accuracy of the determination, and overcome the defects in the related art that incorrect determination causes misjudgment operation such as a flash screen, thus improving user experience.

In one implementation, as shown in Fig. 2, the step 104 may be implemented as steps 201-204.

At step 201, it is determined whether at least one of the N determination results indicates that an obstruction exists for the terminal, when at least one of the N determination results indicates that an obstruction exists for the terminal, step 202 is performed, and when none of the N determination results indicates that an obstruction exists for the terminal, step 204 is performed.

At step 202, it is determined that an obstruction exists for the terminal.

At step 203, a screen state of the terminal is switched from a turned-on state to a turned-off state, and the process is ended.

At step 204, it is determined that no obstruction exists for the terminal.

In the above embodiment of the present invention, by determining whether an obstruction exists for the terminal by obtaining returned ultrasonic-wave values for successive N times within a certain time period, and only when none of the N determination results indicates that an obstruction exists for the terminal, it is determined that no obstruction exists for the terminal, it may improve the accuracy of the determination, and overcome the defects in the related art that incorrect determination causes misjudgment operation such as a flash screen, thus improving user experience.

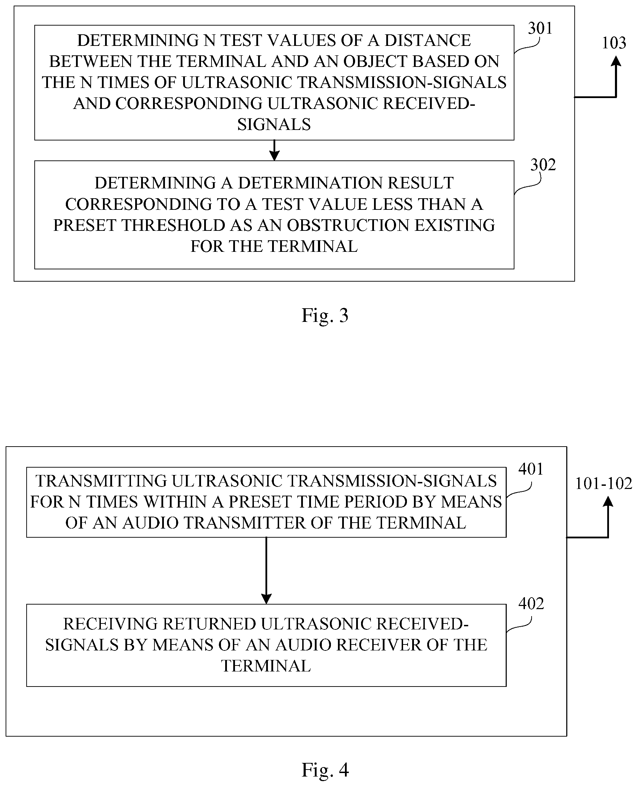

In one implementation, as shown in Fig. 3, the step 103 may be implemented as steps 301 and 302.

At step 301, N test values of a distance between the terminal and an object are determined based on the N times of ultrasonic transmission-signals and corresponding ultrasonic received-signals.

At step 302, a determination result corresponding to a test value less than a preset threshold is determined as an obstruction existing for the terminal.

As an example, for each of the N times of obstruction tests based on ultrasonic wave, the terminal may determine a test value of the distance between the terminal and an object resulted from that time of test based on the ultrasonic transmission-signal and corresponding ultrasonic received-signal of that time of test. When a test value is less than a preset threshold and the object is moving, it is determined that an obstruction exists for the terminal. That is, the determination result obtained from that time of test is an obstruction existing for the terminal. After all of the N test values are successively analyzed, N determination results are obtained.

In the above embodiment of the present invention, N test values of a distance between the terminal and an object are determined based on the N times of ultrasonic transmission-signals and corresponding ultrasonic received-signals. A determination result corresponding to a test value, of the N test values, less than a preset threshold is determined as an obstruction existing for the terminal. Thus, the determination result may be more accurate.

In one implementation, the step 301 may be implemented as the following step a.

At step a, the N test values of the distance between the terminal and the object corresponding to the N times of ultrasonic transmission-signals are respectively determined according to an ultrasonic propagation speed, sending times of the ultrasonic transmission-signals, and received times of the corresponding ultrasonic received-signals for the N times.

In the above embodiment of the present invention, an implementation is provided in which a test value of the distance between the terminal and the object is determined according to a sending time of the ultrasonic transmission-signal, a received time of the corresponding ultrasonic received-signal and an ultrasonic propagation speed. Thus, it may reduce the complexity of the operation and improve the efficiency of the implementation.

In one implementation, the step 301 may be implemented as the following step b.

At step b, the N test values of the distance between the terminal and the object corresponding to the N times of ultrasonic transmission-signals are respectively determined according to differences between amplitudes of the ultrasonic transmission-signals and amplitudes of the corresponding ultrasonic received-signals for the N times.

In the above embodiment of the present invention, an implementation is provided in which a test value of the distance between the terminal and the object is determined according to a difference between an amplitude of the ultrasonic transmission-signal and an amplitude of the corresponding ultrasonic received-signal. Thus, it may reduce the complexity of the operation and improve the efficiency of the implementation.

In one implementation, as shown in Fig. 4, the steps 101-102 may be implemented as steps 401-402.

At step 401, within a preset time period, ultrasonic transmission-signals are transmitted for N times by means of an audio transmitter of the terminal.

As an example, the audio transmitter of the terminal may be a speaker or an ultrasonic sounder of the terminal.

At step 402, returned ultrasonic received-signals are received by means of an audio receiver of the terminal.

As an example, the audio receiver of the terminal may be a microphone of the terminal.

In the embodiment of the present invention, ultrasonic transmission-signals are transmitted by means of an audio transmitter of the terminal and returned ultrasonic received-signals are received by means of an audio receiver of the terminal. Thus, it may improve the efficiency of the implementation by simplifying the solution.

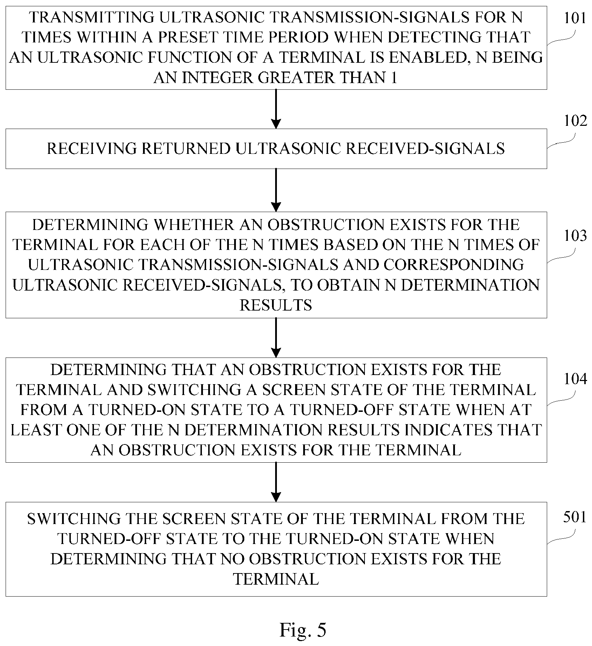

In one implementation, as shown in Fig. 5, the method for controlling a screen state according to the present invention may further include the following steps.

At step 501, after the screen state of the terminal is switched to the turned-off state, when it is determined that no obstruction exists for the terminal, the screen state of the terminal is switched from the turned-off state to the turned-on state.

Here, after step 104 is completed, another determination is made as whether the obstruction for the terminal still exists by performing step 501. When it is determined that no obstruction exists for the terminal, the screen state of the terminal is switched from the turned-off state to a turned-on state. As an example, another determination may be performed by determining continuously or by determining at cycles.

In the embodiment of the present invention, after the screen state of the terminal is switched to a turned-off state, determination is continued to be made as whether an obstruction exists. When it is determined that no obstruction exists for the terminal, the screen state of the terminal is switched from the turned-off state to the turned-on state. Thus, it may facilitate user operation, and improve the user experience.

The implementation will be specifically described below with reference to some examples.

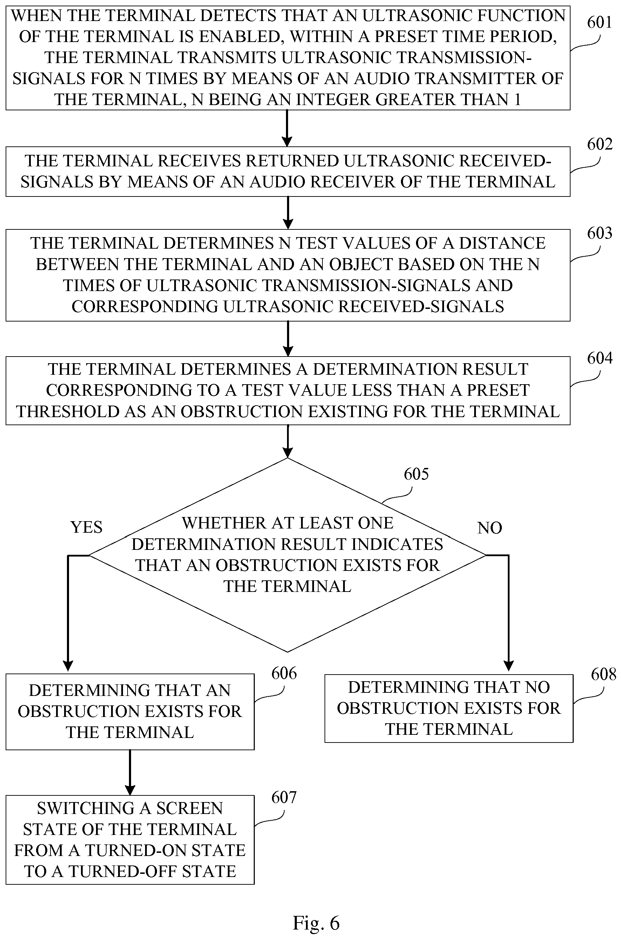

Fig. 6 is a flowchart illustrating a method for controlling a screen state according to an exemplary embodiment. The method may be performed by a terminal. As shown in Fig. 6, the method includes the following steps.

At step 601, when the terminal detects that an ultrasonic function of the terminal is enabled, within a preset time period, the terminal transmits ultrasonic transmission-signals for N times by means of an audio transmitter of the terminal, N being an integer greater than 1.

At step 602, the terminal receives returned ultrasonic received-signals by means of an audio receiver of the terminal.

At step 603, the terminal determines N test values of a distance between the terminal and an object based on the N times of ultrasonic transmission-signals and corresponding ultrasonic received-signals.

As an example, the terminal may determine the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

Alternatively, the terminal may determine the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

At step 604, the terminal determines a determination result corresponding to a test value less than a preset threshold as an obstruction existing for the terminal.

At step 605, it is determined whether at least one of the N determination results indicates that an obstruction exists for the terminal, when at least one of the N determination results indicates that an obstruction exists for the terminal, step 606 is performed, and when none of the N determination results indicates that an obstruction exists for the terminal, step 608 is performed.

At step 606, it is determined that an obstruction exists for the terminal.

At step 607, a screen state of the terminal is switched from a turned-on state to a turned-off state, and the process is ended.

At step 608, it is determined that no obstruction exists for the terminal.

In the embodiment of the present invention, by determining whether an obstruction exists for the terminal by obtaining returned ultrasonic-wave values for successive N times within a certain time period, it may improve the accuracy of the determination, and overcome the defects in the related art that incorrect determination causes misjudgment operation such as a flash screen, thus improving user experience.

In the related art, after an ultrasonic function of a terminal (such as a mobile device) is enabled, if an obstruction object is moving, the terminal may properly determine that there is an obstruction object, and determine a distance from the obstruction object. If an obstruction object does not move during a time period, for example, when an object covers the ultrasonic portion and does not move during a time period, it may be determined that no obstruction object exists and the ultrasonic function will not be performed. Thus, the determination is not accurate, and may cause misjudgment operation such as a flash screen.

In an embodiment, when the ultrasonic function is enabled, a first determination mechanism is provided. That is, after the ultrasonic function is enabled, it is determined whether an obstruction exists by obtaining returned ultrasonic-wave values for successive N times within a certain time period. Thus, it may improve the accuracy of the determination, and avoid misjudgment operation such as a flash screen caused by incorrect ultrasonic determination.

The implementation of determining a distance from the obstruction object based on ultrasonic wave may include: according to sound wave of a fixed frequency successively emitted from an earpiece (or an ultrasonic sounder) of a terminal and acoustic data reflected by an object, which is continuously received by a microphone of the terminal, a distance from the object to the mobile phone is calculated by any of the following approaches. The first approach is that the distance from the object to the mobile phone is calculated in real time according to a time difference between the transmitting time and the receiving time of the sound wave, and the propagation speed of the sound wave. The second approach is that the distance from the object to the mobile phone is calculated in real time according to an energy attenuation ratio of the received sound wave (i.e. the change in the amplitude of the sound wave). Since the transmitted ultrasonic wave may be attenuated when it is received, the frequency response curve of the received sound wave will present an amplitude deviation from the frequency response curve of the transmitted sound wave. After sound waves of different frequencies are transmitted, a certain frequency, at which the amplitude deviation shown in the frequency response is the smallest when the sound waves of different frequencies are received, may be determined as the frequency best suitable for the device.

When the ultrasonic function of the terminal is enabled, a first determination mechanism is performed. That is, after the ultrasonic function is enabled, it is determined whether an obstruction exists by obtaining returned ultrasonic-wave values for successive N times within a certain time period (the specific time period is not limited). N is larger than 1. If one or more of the N times of the returned values indicate that an obstruction exists in front of the terminal, it is determined that an obstruction exists in front of the terminal. If none of the N times of the returned values indicates that an obstruction exists in front of the terminal, it is determined that no obstruction exists in front of the terminal. Thus, it may improve the accuracy of the determination, and avoid misjudgment operation such as a flash screen caused by incorrect ultrasonic determination.

Hereinafter device embodiments according to the present invention will be described, which may be configured to perform the method embodiments according to the present invention.

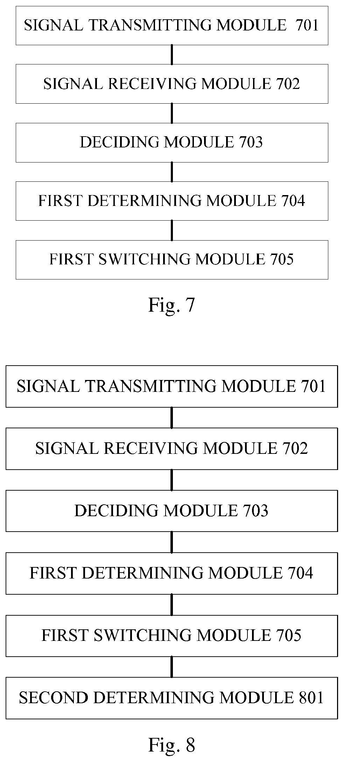

Fig. 7 is a block diagram illustrating a device for controlling a screen state according to an exemplary embodiment. The device may be implemented in software, hardware or combination of both, to perform the method according to the present invention. As shown in Fig. 7, the device for controlling a screen state includes a signal transmitting module 701, a signal receiving module 702, a deciding module 703, a first determining module 704 and a first switching module 705.

The signal transmitting module 701 is configured to transmit ultrasonic transmission-signals for N times within a preset time period when it is detected that an ultrasonic function of a terminal is enabled, N being an integer greater than 1.

The signal receiving module 702 is configured to receive returned ultrasonic received-signals.

The deciding module 703 is configured to determine whether an obstruction exists for the terminal for each of the N times based on the N times of ultrasonic transmission-signals and corresponding ultrasonic received-signals, to obtain N determination results.

The first determining module 704 is configured to determine that an obstruction exists for the terminal when at least one of the N determination results indicates that an obstruction exists for the terminal.

The first switching module 705 is configured to switch a screen state of the terminal from a turned-on state to a turned-off state.

In the device for controlling a screen state according to the above embodiment of the present invention, by determining whether an obstruction exists for the terminal by obtaining returned ultrasonic-wave values for successive multiple times within a certain time period, it may improve the accuracy of the determination, and overcome the defects in the related art that incorrect determination causes misjudgment operation such as a flash screen, thus improving user experience.

In one implementation, as shown in Fig. 8, the device for controlling a screen state disclosed above may also include: a second determining module 801. The second determining module 801 is configured to determine that no obstruction exists for the terminal when none of the N determination results indicates that an obstruction exists for the terminal.

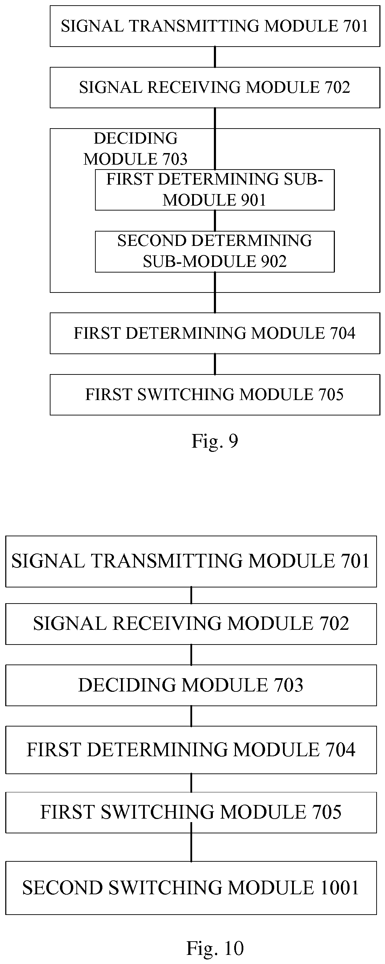

In one implementation, as shown in Fig. 9, the device for controlling a screen state disclosed above may also configure the deciding module 703 to include: a first determining sub-module 901 and a second determining sub-module 902.

The first determining sub-module 901 is configured to determine N test values of a distance between the terminal and an object based on the N times of ultrasonic transmission-signals and corresponding ultrasonic received-signals.

The second determining sub-module 902 is configured to determine a determination result corresponding to a test value less than a preset threshold as an obstruction existing for the terminal.

Optionally, the first determining sub-module 901 is configured to determine the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

Optionally, the first determining sub-module 901 is configured to determine the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

Optionally, the signal transmitting module 701 is configured to transmit ultrasonic transmission-signals for N times within a preset time period by means of an audio transmitter of the terminal; and the signal receiving module 702 is configured to receive returned ultrasonic received-signals by means of an audio receiver of the terminal.

In one implementation, as shown in Fig. 10, the device for controlling a screen state disclosed above may also include: a second switching module 1001. The second switching module 1001 is configured to, after the screen state of the terminal is switched to the turned-off state by the second switching module, switch the screen state of the terminal from the turned-off state to the turned-on state when it is determined that no obstruction exists for the terminal.

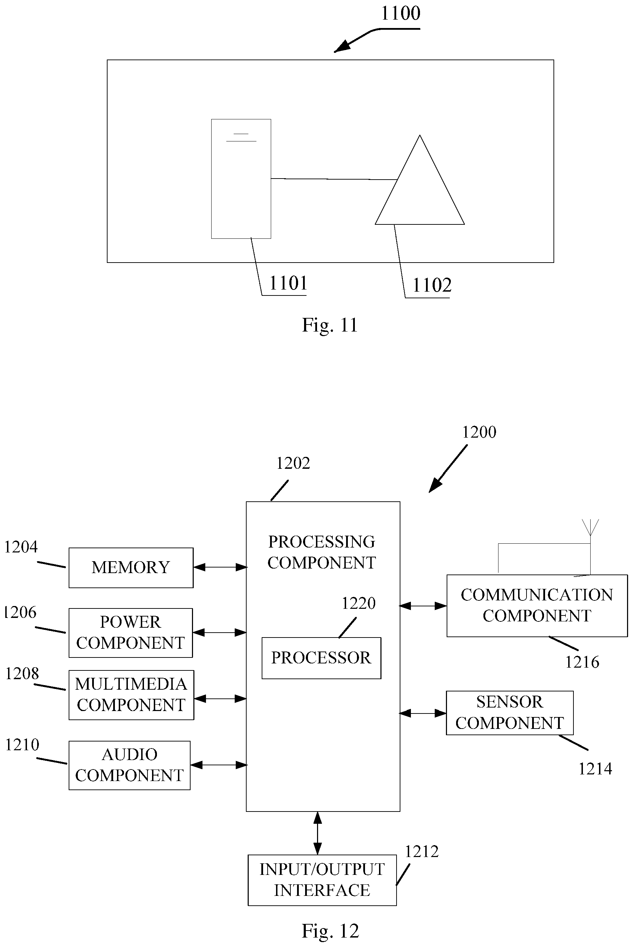

Fig. 11 is a block diagram illustrating a device 1100 for controlling a screen state according to an exemplary embodiment. The device 1100 for controlling a screen state includes:
a processor 1101; and
a memory 1102 for storing instructions executable by the processor;
wherein the processor 1101 is configured to: transmit ultrasonic transmission-signals for N times within a preset time period when detecting that an ultrasonic function of a terminal is enabled, N being an integer greater than 1; receive returned ultrasonic received-signals; determine whether an obstruction exists for the terminal for each of the N times based on the N times of ultrasonic transmission-signals and corresponding ultrasonic received-signals, to obtain N determination results; determine that an obstruction exists for the terminal and switch a screen state of the terminal from a turned-on state to a turned-off state when at least one of the N determination results indicates that an obstruction exists for the terminal.

In one embodiment, the processor 1101 may also be configured to determine that no obstruction exists for the terminal when none of the N determination results indicates that an obstruction exists for the terminal.

In one embodiment, the processor 1101 may also be configured to determine N test values of a distance between the terminal and an object based on the N times of ultrasonic transmission-signals and corresponding ultrasonic received-signals; and determine a determination result corresponding to a test value less than a preset threshold as an obstruction existing for the terminal.

In one embodiment, the processor 1101 may also be configured to determine the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

In one embodiment, the processor 1101 may also be configured to determine the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

In one embodiment, the processor 1101 may also be configured to transmit ultrasonic transmission-signals for N times within a preset time period by means of an audio transmitter of the terminal, and receive returned ultrasonic received-signals by means of an audio receiver of the terminal.

In one embodiment, the processor 1101 may also be configured to switch the screen state of the terminal from the turned-off state to the turned-on state when determining that no obstruction exists for the terminal.

With the device for controlling a screen state provided by the embodiment of the present invention, by determining whether an obstruction exists for the terminal by obtaining returned ultrasonic-wave values for successive multiple times within a certain time period, it may improve the accuracy of the determination, and overcome the defects in the related art that incorrect determination causes misjudgment operation such as a flash screen, thus improving user experience.

With respect to the test apparatus in the above embodiments, the specific manners for performing operations for individual modules therein have been described in detail in the embodiments regarding the relevant methods, which will not be elaborated herein.

Fig. 12 is a block diagram illustrating a device for controlling a screen state according to an exemplary embodiment. The device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200 for controlling a screen state, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200 for controlling a screen state. Examples of such data include instructions for any applications or methods operated on the device 1200 for controlling a screen state, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200 for controlling a screen state. The power component 1206 may include a power management system, one or more power sources, and any other components associated with the generation, management, and distribution of power in the device 1200 for controlling a screen state.

The multimedia component 1208 includes a screen providing an output interface between the device 1200 for controlling a screen state and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 for controlling a screen state is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 for controlling a screen state is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200 for controlling a screen state. For instance, the sensor component 1214 may detect an open/closed status of the device 1200 for controlling a screen state, relative positioning of components, e.g., the display and the keypad, of the device 1200 for controlling a screen state, a change in position of the device 1200 for controlling a screen state or a component of the device 1200 for controlling a screen state, a presence or absence of user contact with the device 1200 for controlling a screen state, an orientation or an acceleration/deceleration of the device 1200 for controlling a screen state, and a change in temperature of the device 1200 for controlling a screen state. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 for controlling a screen state and other devices. The device 1200 for controlling a screen state can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technolo gies.

In exemplary embodiments, the device 1200 for controlling a screen state may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200 for controlling a screen state, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by the processor of the device 1200 for controlling a screen state, enables the device 1200 for controlling a screen state to perform the method for controlling a screen state. The method includes:
transmitting ultrasonic transmission-signals for N times within a preset time period when detecting that an ultrasonic function of a terminal is enabled, N being an integer greater than 1;
receiving returned ultrasonic received-signals;
determining whether an obstruction exists for the terminal for each of the N times based on the N times of ultrasonic transmission-signals and corresponding ultrasonic received-signals, to obtain N determination results; and
determining that an obstruction exists for the terminal and switching a screen state of the terminal from a turned-on state to a turned-off state when at least one of the N determination results indicates that an obstruction exists for the terminal.

In one embodiment, the method further includes: determining that no obstruction exists for the terminal when none of the N determination results indicates that an obstruction exists for the terminal.

In one embodiment, determining whether an obstruction exists for the terminal for each of the N times based on the N times of ultrasonic transmission-signals and corresponding ultrasonic received-signals, to obtain N determination results, includes: determining N test values of a distance between the terminal and an object based on the N times of ultrasonic transmission-signals and corresponding ultrasonic received-signals; and determining a determination result corresponding to a test value less than a preset threshold as an obstruction existing for the terminal.

In one embodiment, determining N test values of a distance between the terminal and an object based on the N times of ultrasonic transmission-signals and corresponding ultrasonic received-signals includes: determining the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

In one embodiment, determining N test values of a distance between the terminal and an object based on the N times of ultrasonic transmission-signals and corresponding ultrasonic received-signals includes: determining the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

In one embodiment, transmitting ultrasonic transmission-signals for N times within a preset time period and receiving returned ultrasonic received-signals includes: transmitting ultrasonic transmission-signals for N times within a preset time period by means of an audio transmitter of the terminal, and receiving returned ultrasonic received-signals by means of an audio receiver of the terminal.

In one embodiment, after the screen state of the terminal is switched to the turned-off state, the method further includes: switching the screen state of the terminal from the turned-off state to the turned-on state when determining that no obstruction exists for the terminal.

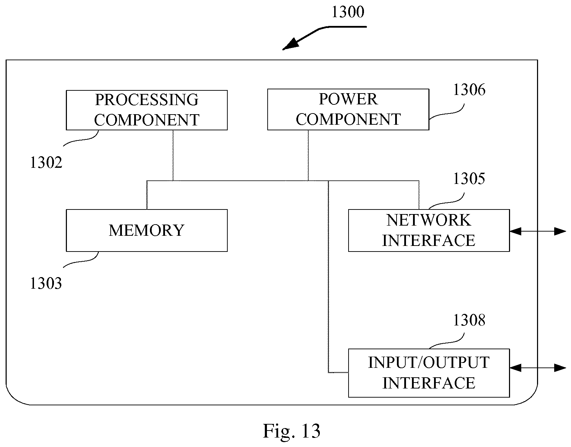

Fig. 13 is a block diagram of a device for controlling a screen state according to an exemplary embodiment. For example, the device 1300 for controlling a screen state may be provided as a server. The device 1300 for controlling a screen state includes a processing component 1302 that further includes one or more processors, and memory resources represented by a memory 1303 for storing instructions executable by the processing component 1302, such as application programs. The application programs stored in the memory 1303 may include one or more modules each corresponding to a set of instructions. Further, the processing component 1302 is configured to execute the instructions to perform the above described method.

The device 1300 for controlling a screen state may also include a power component 1306 configured to perform power management of the device 1300, wired or wireless network interface(s) 1305 configured to connect the device 1300 for controlling a screen state to a network, and an input/output (I/O) interface 1308. The device 1300 for controlling a screen state may operate based on an operating system stored in the memory 1303, such as Windows Server™, Mac OS X™, Unix™, Linux™, FreeBSD™, or the like.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for controlling a screen state, comprising:
transmitting (101) ultrasonic transmission-signals for N times within a preset time period when detecting that an ultrasonic function of a terminal is enabled, N being an integer greater than 1;
receiving (102) returned ultrasonic received-signals;
determining (103) whether an obstruction exists for the terminal for each of the N times based on the N times of ultrasonic transmission-signals and corresponding ultrasonic received-signals, to obtain N determination results; and
determining (104) that an obstruction exists for the terminal and switching a screen state of the terminal from a turned-on state to a turned-off state when at least one of the N determination results indicates that an obstruction exists for the terminal, **characterized in that** determining (103) whether an obstruction exists for the terminal for each of the N times based on the N times of ultrasonic transmission-signals and corresponding ultrasonic received-signals, to obtain N determination results, comprises:
determining (301) N test values of a distance between the terminal and an object based on the N times of ultrasonic transmission-signals and corresponding ultrasonic received-signals; and
determining (302) a determination result corresponding to a test value less than a preset threshold as an obstruction existing for the terminal.

2. The method according to claim 1, further comprising:
determining that no obstruction exists for the terminal when none of the N determination results indicates that an obstruction exists for the terminal.

3. The method according to claim 1 or 2, wherein determining (301) N test values of a distance between the terminal and an object based on the N times of ultrasonic transmission-signals and corresponding ultrasonic received-signals comprises:
determining the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

4. The method according to claim 1 or 2, wherein determining (301) N test values of a distance between the terminal and an object based on the N times of ultrasonic transmission-signals and corresponding ultrasonic received-signals comprises:
determining the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

5. The method according to any one of the preceding claims, wherein transmitting (101) ultrasonic transmission-signals for N times within a preset time period and receiving (102) returned ultrasonic received-signals comprises:
transmitting (401) ultrasonic transmission-signals for N times within a preset time period by means of an audio transmitter of the terminal, and receiving (402) returned ultrasonic received-signals by means of an audio receiver of the terminal.

6. The method according to any one of the preceding claims, wherein after the screen state of the terminal is switched to the turned-off state (104), the method further comprises:
switching (501) the screen state of the terminal from the turned-off state to the turned-on state when determining that no obstruction exists for the terminal.

7. A device for controlling a screen state, comprising:
a signal transmitting module (701) configured to transmit ultrasonic transmission-signals for N times within a preset time period when it is detected that an ultrasonic function of a terminal is enabled, N being an integer greater than 1;
a signal receiving module (702) configured to receive returned ultrasonic received-signals;
a deciding module (703) configured to determine whether an obstruction exists for the terminal for each of the N times based on the N times of ultrasonic transmission-signals and corresponding ultrasonic received-signals, to obtain N determination results;
a first determining module (704) configured to determine that an obstruction exists for the terminal when at least one of the N determination results indicates that an obstruction exists for the terminal; and
a first switching module (705) configured to switch a screen state of the terminal from a turned-on state to a turned-off state, **characterized in that** the deciding module (703) comprises:
a first determining sub-module (901) configured to determine N test values of a distance between the terminal and an object based on the N times of ultrasonic transmission-signals and corresponding ultrasonic received-signals; and
a second determining sub-module (902) configured to determine a determination result corresponding to a test value less than a preset threshold as an obstruction existing for the terminal.

8. The device according to claim 7, further comprising:
a second determining module (801) configured to determine that no obstruction exists for the terminal when none of the N determination results indicates that an obstruction exists for the terminal.

9. The device according to claim 7 or 8, wherein the first determining sub-module (901) is configured to determine the N test values of the distance between the terminal and the object corresponding to the N times of ultrasonic transmission-signals respectively according to an ultrasonic propagation speed, sending times of the ultrasonic transmission-signals, and received times of the corresponding ultrasonic received-signals for the N times.

10. The device according to claim 7 or 8, wherein the first determining sub-module (901) is configured to determine the N test values of the distance between the terminal and the object corresponding to the N times of ultrasonic transmission-signals respectively according to differences between amplitudes of the ultrasonic transmission-signals and amplitudes of the corresponding ultrasonic received-signals for the N times.

11. A device for controlling a screen state, comprising:
a signal transmitting module (701) configured to transmit ultrasonic transmission-signals for N times within a preset time period when it is detected that an ultrasonic function of a terminal is enabled, N being an integer greater than 1;
a signal receiving module (702) configured to receive returned ultrasonic received-signals;
a processor; and
a memory for storing instructions executable by the processor;
wherein the processor is configured to perform the method for controlling a screen
state according to any of claims 1 to 6.

12. A computer program including instructions to cause the device of claim 11 to execute the steps of a method for controlling a screen state according to any of claims 1 to 6.

13. A recording medium readable by a computer and having recorded thereon the computer program of claim 12.

## Patentansprüche

1. Verfahren zum Steuern eines Bildschirmzustands, umfassend:
N-maliges Übertragen (101) von Ultraschallübertragungssignalen innerhalb einer vorgegebenen Zeitspanne, wenn detektiert bzw. festgestellt wird, dass eine Ultraschallfunktion eines Terminals bzw. Endgerätes aktiviert ist, wobei N eine ganze Zahl ist, die größer als 1 ist;
Empfangen (102) von zurückgegebenen bzw. zurückgekehrten Ultraschallempfangssignalen;
Bestimmen (103), ob für jedes der N Male basierend auf den N-maligen Ultraschallübertragungssignalen und entsprechenden Ultraschallempfangssignalen ein Hindernis für das Terminal besteht bzw. existiert, um N Bestimmungsergebnisse zu erhalten; und
Bestimmen (104), dass ein Hindernis für das Terminal vorhanden ist, und Umschalten eines Bildschirmzustands des Terminals von einem eingeschalteten Zustand in einen ausgeschalteten Zustand, wenn mindestens eines der N Bestimmungsergebnisse anzeigt, dass ein Hindernis für das Terminal vorhanden ist, **dadurch gekennzeichnet,**
**dass** das Bestimmen (103), ob für jedes der N Male basierend auf den N-maligen Ultraschallübertragungssignalen und entsprechenden Ultraschallempfangssignalen ein Hindernis für das Terminal besteht, um N Bestimmungsergebnisse zu erhalten, umfasst:
Bestimmen (301) von N Testwerten eines Abstandes zwischen dem Terminal und einem Objekt basierend auf den N-maligen Ultraschallübertragungssignalen und entsprechenden Ultraschallempfangssignalen; und
Bestimmen (302) eines Bestimmungsergebnisses, das einem Testwert entspricht, der kleiner ist als ein voreingestellter Schwellenwert, als ein für das Terminal bestehendes Hindernis.

2. Verfahren nach Anspruch 1, ferner umfassend:
Bestimmen, dass für das Terminal kein Hindernis besteht, wenn keines der N Bestimmungsergebnisse anzeigt, dass für das Terminal ein Hindernis besteht.

3. Verfahren nach Anspruch 1 oder 2, wobei das Bestimmen (301) von N Testwerten eines Abstandes zwischen dem Terminal und einem Objekt basierend auf den N-maligen Ultraschallübertragungssignalen und entsprechenden Ultraschallempfangssignalen umfasst:
Bestimmen der N Testwerte des Abstandes zwischen dem Terminal und dem Objekt entsprechend den N-maligen jeweiligen Ultraschallübertragungssignalen gemäß einer Ultraschallausbreitungsgeschwindigkeit, den Sende- bzw. Übertragungszeiten der Ultraschallübertragungssignale und den Empfangszeiten der entsprechenden Ultraschallempfangssignale für die N Male.

4. Verfahren nach Anspruch 1 oder 2, wobei das Bestimmen (301) von N Testwerten eines Abstandes zwischen dem Terminal und einem Objekt basierend auf den N-maligen Ultraschallübertragungssignalen und entsprechenden Ultraschallempfangssignalen umfasst:
Bestimmen der N Testwerte des Abstandes zwischen dem Terminal und dem Objekt entsprechend den N-maligen jeweiligen Ultraschallübertragungssignalen gemäß den Unterschieden zwischen den Amplituden der Ultraschallübertragungssignale und den Amplituden der entsprechenden Ultraschallempfangssignale für die N Male.

5. Verfahren nach einem der vorhergehenden Ansprüche, wobei das N-malige Übertragen (101) von Ultraschallübertragungssignalen innerhalb einer vorgegebenen Zeitspanne und das Empfangen (102) von zurückgegebenen Ultraschallempfangssignalen umfasst:
N-maliges Senden (401) von Ultraschallübertragungssignalen innerhalb einer vorgegebenen Zeitspanne mittels eines Audiosenders des Terminals und Empfangen (402) von zurückgegebenen Ultraschallempfangssignalen mittels eines Audioempfängers des Terminals.

6. Verfahren nach einem der vorhergehenden Ansprüche, wobei das Verfahren, nachdem der Bildschirmzustand des Terminals in den ausgeschalteten Zustand (104) geschaltet wurde, ferner umfasst:
Schalten (501) des Bildschirmzustands des Terminals vom ausgeschalteten Zustand in den eingeschalteten Zustand, wenn festgestellt wird, dass für das Terminal kein Hindernis vorliegt.

7. Vorrichtung zum Steuern eines Bildschirmzustands, umfassend:
ein Signalübertragungsmodul (701), das eingerichtet ist, Ultraschallübertragungssignale N-mal innerhalb einer vorgegebenen Zeitspanne zu übertragen, wenn erfasst wird, dass eine Ultraschallfunktion eines Terminals aktiviert ist, wobei N eine ganze Zahl ist, die größer als 1 ist;
ein Signalempfangsmodul (702), das eingerichtet ist, zurückgegebene bzw. zurückkehrende Ultraschallempfangssignale zu empfangen;
ein Entscheidungsmodul (703), das eingerichtet ist, zu bestimmen, ob für jedes der N Male basierend auf den N-maligen Ultraschallübertragungssignalen und entsprechenden Ultraschallempfangssignalen ein Hindernis für das Terminal besteht, um N Bestimmungsergebnisse zu erhalten;
ein erstes Bestimmungsmodul (704), das eingerichtet ist, zu bestimmen, dass ein Hindernis für das Terminal besteht, wenn mindestens eines der N Bestimmungsergebnisse anzeigt, dass ein Hindernis für das Terminal besteht; und
ein erstes Schaltmodul (705), das eingerichtet ist, einen Bildschirmzustand des Terminals von einem eingeschalteten Zustand in einen ausgeschalteten Zustand zu schalten, **dadurch gekennzeichnet, dass** das Entscheidungsmodul (703) umfasst:
ein erstes Bestimmungsuntermodul (901), das eingerichtet ist, N Testwerte eines Abstandes zwischen dem Terminal und einem Objekt basierend auf den N-maligen Ultraschallübertragungssignalen und entsprechenden Ultraschallempfangssignalen zu bestimmen; und
ein zweites Bestimmungsuntermodul (902), das eingerichtet ist, ein Bestimmungsergebnis, das einem Testwert entspricht, der kleiner ist als ein voreingestellter Schwellenwert, als ein für das Terminal bestehendes Hindernis zu bestimmen.

8. Die Vorrichtung nach Anspruch 7, ferner umfassend:
ein zweites Bestimmungsmodul (801), das eingerichtet ist, zu bestimmen, dass kein Hindernis für das Terminal besteht, wenn keines der N Bestimmungsergebnisse anzeigt, dass ein Hindernis für das Terminal besteht.

9. Die Vorrichtung nach Anspruch 7 oder 8, wobei das erste Bestimmungsuntermodul (901) eingerichtet ist, die N Testwerte des Abstandes zwischen dem Terminal und dem Objekt entsprechend den N-maligen Ultraschallübertragungssignale jeweils gemäß einer Ultraschallausbreitungsgeschwindigkeit, den Sendezeiten der Ultraschallübertragungssignale und den Empfangszeiten der entsprechenden Ultraschallempfangssignale für die N Male zu bestimmen.

10. Die Vorrichtung nach Anspruch 7 oder 8, wobei das erste Bestimmungsuntermodul (901) eingerichtet ist, die N Testwerte des Abstandes zwischen dem Terminal und dem Objekt entsprechend den N-maligen Ultraschallübertragungssignalen jeweils gemäß den Unterschieden zwischen den Amplituden der Ultraschallübertragungssignale und den Amplituden der entsprechenden Ultraschallempfangssignale für die N Male zu bestimmen.

11. Vorrichtung zum Steuern eines Bildschirmzustands, umfassend:
ein Signalübertragungsmodul (701), das eingerichtet ist, Ultraschallübertragungssignale für N-mal innerhalb einer vorgegebenen Zeitspanne zu übertragen, wenn detektiert wird, dass eine Ultraschallfunktion eines Terminals aktiviert ist, wobei N eine ganze Zahl ist, die größer als 1 ist;
ein Signalempfangsmodul (702), das eingerichtet ist, zurückgegebene UltraschallEmpfangssignale zu empfangen;
einen Prozessor; und
einen Speicher zum Speichern von Anweisungen, die vom Prozessor ausführbar sind; wobei der Prozessor eingerichtet ist, das Verfahren zum Steuern eines Bildschirmzustands nach einem der Ansprüche 1 bis 6 durchzuführen.

12. Computerprogramm mit Anweisungen, um die Vorrichtung nach Anspruch 11 zu veranlassen, die Schritte eines Verfahrens zum Steuern eines Bildschirmzustands nach einem der Ansprüche 1 bis 6 auszuführen.

13. Aufzeichnungsmedium, das von einem Computer lesbar ist und auf dem das Computerprogramm nach Anspruch 12 aufgezeichnet ist.

## Revendications

1. Procédé de commande d'un état d'écran, comprenant :
transmettre (101) des signaux d'émission ultrasonores pour N fois à l'intérieur d'une période de temps prédéfinie en détectant qu'une fonction ultrasonore d'un terminal est activée, N étant un entier supérieur à 1 ;
réception (102) des signaux ultrasoniques reçus renvoyés ;
déterminer (103) s'il existe une obstruction pour le terminal pour chacune des N fois sur la base des N fois des signaux d'émission ultrasonores et des signaux de réception ultrasonores correspondants, pour obtenir N résultats de détermination ; et
déterminer (104) qu'une obstruction existe pour le terminal et commuter un état d'écran du terminal d'un état activé à un état désactivé lorsqu'au moins un des N résultats de détermination indique qu'une obstruction existe pour le terminal, **caractérisé en ce que** déterminer (103) si une obstruction existe pour le terminal pour chacune des N fois sur la base des N temps des signaux de transmission ultrasoniques et signaux correspondants reçus, pour obtenir N résultats de détermination, comprend :
déterminer (301) N valeurs d'essai d'une distance entre le terminal et un objet sur la base des N temps des signaux d'émission ultrasonores et des signaux de réception ultrasonores correspondants ; et
déterminer (302) un résultat de détermination correspondant à une valeur d'essai inférieure à un seuil prédéfini en tant qu'obstacle existant pour le terminal.

2. Procédé selon la revendication 1, comprenant en outre :
déterminer qu'il n'y a pas d'obstruction pour le terminal lorsqu'aucun des résultats de la détermination N n'indique qu'il y a une obstruction pour le terminal.

3. Procédé selon la revendication 1 ou 2, dans lequel on détermine (301) N valeurs d'essai d'une distance entre le terminal et un objet sur la base des N temps des signaux d'émission et des signaux de réception ultrasonores correspondants :
déterminer les N valeurs d'essai de la distance entre le terminal et l'objet correspondant aux N temps des signaux d'émission ultrasonores respectivement en fonction d'une vitesse de propagation ultrasonore, des temps d'émission des signaux d'émission ultrasonores et des temps de réception des signaux reçus ultrasonores correspondants pour les N temps.

4. Procédé selon la revendication 1 ou 2, dans lequel on détermine (301) N valeurs d'essai d'une distance entre le terminal et un objet sur la base des N temps des signaux d'émission et des signaux de réception ultrasonores correspondants :
déterminer les N valeurs d'essai de la distance entre le terminal et l'objet correspondant aux N temps des signaux d'émission ultrasonores respectivement en fonction des différences entre les amplitudes des signaux d'émission ultrasonores et les amplitudes des signaux de réception ultrasons correspondants pour les N temps.

5. Procédé selon l'une quelconque des revendications précédentes, dans lequel l'émission (101) de signaux d'émission ultrasonores pour N fois dans une période de temps prédéterminée et la réception (102) de signaux de réception ultrasonores renvoyés comprennent :
l'émission (401) de signaux d'émission ultrasonores pour N fois à l'intérieur d'une période de temps prédéterminée au moyen d'un émetteur audio du terminal, et la réception (402) de signaux de réception ultrasonores renvoyés au moyen d'un récepteur audio du terminal.

6. Procédé selon l'une quelconque des revendications précédentes, dans lequel, après que l'état d'écran du terminal est commuté à l'état éteint (104), le procédé comprend en outre :
la commutation (501) de l'état de l'écran du terminal de l'état éteint à l'état allumé lorsque l'on détermine qu'il n'existe aucun obstacle pour le terminal.

7. Dispositif de commande d'un état d'écran, comprenant :
un module de transmission de signaux (701) configuré pour transmettre des signaux de transmission ultrasonores pendant N fois dans une période de temps prédéterminée lorsqu'il est détecté qu'une fonction ultrasonore d'un terminal est activée, N étant un entier supérieur à 1 ;
un module de réception de signaux (702) configuré pour recevoir les signaux ultrasoniques reçus renvoyés ;
un module de décision (703) configuré pour déterminer s'il existe une obstruction pour le terminal pour chacune des N temps sur la base des N temps des signaux d'émission ultrasonores et des signaux de réception ultrasonores correspondants, pour obtenir N résultats de détermination ;
un premier module de détermination (704) configuré pour déterminer qu'une obstruction existe pour le terminal lorsqu'au moins l'un des N résultats de détermination indique qu'une obstruction existe pour le terminal ; et
un premier module de commutation (705) configuré pour commuter un état d'écran du terminal d'un état allumé à un état éteint, **caractérisé en ce que** le module de décision (703) comprend :
un premier sous-module de détermination (901) configuré pour déterminer N valeurs d'essai d'une distance entre le terminal et un objet sur la base des N temps des signaux d'émission ultrasonores et des signaux de réception ultrasoniques correspondants ; et
un deuxième sous-module de détermination (902) configuré pour déterminer un résultat de détermination correspondant à une valeur d'essai inférieure à un seuil prédéfini en tant qu'obstacle existant pour le terminal.

8. Dispositif selon la revendication 7, comprenant en outre :
un deuxième module de détermination (801) configuré pour déterminer qu'aucune obstruction n'existe pour le terminal lorsqu'aucun des N résultats de détermination n'indique qu'il existe une obstruction pour le terminal.

9. Dispositif selon la revendication 7 ou 8, dans lequel le premier sous-module de détermination (901) est configuré pour déterminer les N valeurs de test de la distance entre le terminal et l'objet correspondant aux N temps de signaux d'émission ultrasonores respectivement selon une vitesse de propagation ultrasonique, des temps d'émission des signaux d'émission ultrasonores et des temps de réception des signaux reçus ultrasons correspondants des N temps.

10. Dispositif selon la revendication 7 ou 8, dans lequel le premier sous-module de détermination (901) est configuré pour déterminer les N valeurs de test de la distance entre le terminal et l'objet correspondant aux N temps des signaux d'émission ultrasonores respectivement selon les différences entre les amplitudes des signaux d'émission ultrasonores et les amplitudes des signaux de réception ultrasonores correspondants pour les N temps.

11. Dispositif de commande d'un état d'écran, comprenant :
un module de transmission de signaux (701) configuré pour transmettre des signaux de transmission ultrasonores pendant N fois dans une période de temps prédéterminée lorsqu'il est détecté qu'une fonction ultrasonore d'un terminal est activée, N étant un entier supérieur à 1 ;
un module de réception de signaux (702) configuré pour recevoir les signaux ultrasoniques reçus renvoyés ;
un processeur ; et
une mémoire pour stocker les instructions exécutables par le processeur ;
dans laquelle le processeur est configuré pour exécuter le procédé de commande d'un
état d'écran selon l'une quelconque des revendications 1 à 6.

12. Programme d'ordinateur comprenant des instructions pour amener le dispositif selon la revendication 11 à exécuter les étapes d'un procédé pour commander un état d'écran selon l'une quelconque des revendications 1 à 6.

13. Support/média d'enregistrement lisible par un ordinateur et sur lequel est enregistré le programme d'ordinateur selon la revendication 12.
